# EUROPEAN PATENT APPLICATION

(11) **EP 4 633 028 A1**
(43) Date of publication of application: **15.10.2025**
(21) Application number: 25168576.4
(22) Date of filing: 04.04.2025
(51) Int. Cl.: H02M 3/335, H02M 1/00, H02M 1/08, H02M 1/44

(54) **EMI EMISSION CONTROL ON DC-DC CONVERTERS IN A MOTOR DRIVE APPLICATION WITH MULTIPLE ISOLATED INPUT VOLTAGES AND OUTPUT VOLTAGES**

(30) Priority: 08.04.2024 IN 202411028639
(71) Applicant: Hamilton Sundstrand Corporation, Charlotte, NC 28217-4578 (US)
(72) Inventor: KUMAR, Manish, 560066 Bangalore (IN); KALLURI, Nageswara Rao, 560016 Bangalore (IN); GHOSE, Tanay, 700064 Kolkata (IN); BANAHATTI, Bapu Kallappa, 560078 Bangalore (IN)
(74) Representative: Dehns

(57) **Abstract**

A system includes a pulse width modulation controller configured to control a first output voltage of a first power supply (127) associated with the system. The first power supply is referenced to a first input ground associated with the system and the first output voltage is referenced to a first output ground associated with the system. The system includes a programmable device (110) configured to configured to control a second output voltage of a second power supply (130) associated with the system. The second power supply is referenced to a second output ground associated with the system. The programmable device is powered based on the first output voltage.

## Description

### CROSS-REFERENCE TO RELATED APPLICATIONS

This application claims priority from Indian Patent Application No. 202411028639 filed April 8, 2024invention.

### BACKGROUND

The present invention relates to DC-DC converters in motor drive applications and, in particular, to electromagnetic interference (EMI) emission control using a programmable device on DC-DC converters in motor drive applications with multiple isolated input voltages and output voltages.

In some motor drive products, switching regulators, particularly those operating in flyback or push-pull topologies, may encounter various challenges in achieving electromagnetic compatibility (EMC) compliance while simultaneously maintaining a target output voltage. The selection of an optimal switching frequency for achieving EMC compliance while maintaining a target output voltage presents a delicate balance. The problem may become more prominent for cases of multiple power supplies such as, for example, gate drive circuits, operating in motor drive electronics.

Some approaches for voltage regulation are unable to adjust the control over the EMI emission spectrum without a change in hardware. Such restrictions on controlling the EMI emission spectrum present a problem for cases in which hardware is already in qualification build and modifying (e.g., respinning) the hardware is not a feasible solution.

### SUMMARY

According to the present invention, a system is provided including: a pulse width modulation controller configured to control a first output voltage of a first power supply associated with the system, wherein the first power supply is referenced to a first input ground associated with the system and the first output voltage is referenced to a first output ground associated with the system; and a programmable device configured to configured to control a second output voltage of a second power supply associated with the system, wherein the second power supply is referenced to a second output ground associated with the system, wherein the programmable device is powered based on the first output voltage.

In any one or combination of the embodiments disclosed herein, the system includes: a first voltage regulator including the pulse width modulation controller, wherein the pulse width modulation controller is referenced to the first input ground; and a second voltage regulator, wherein: the programmable device is configured to generate and provide a drive signal to the second voltage regulator in association with controlling the second output voltage; and the second output voltage is based on the drive signal.

In any one or combination of the embodiments disclosed herein: the first output voltage at the first power supply is based on a first input voltage received at the first voltage regulator; and the second output voltage at the second power supply is based on a second input voltage received at the second voltage regulator.

In any one or combination of the embodiments disclosed herein, the system includes: a first startup circuit configured to provide a first startup voltage to one or more circuits of the first voltage regulator based on a first input voltage received at the first voltage regulator; and a second startup circuit configured to provide a second startup voltage to one or more circuits of the second voltage regulator based on a second input voltage received at the second voltage regulator.

**In** any one or combination of the embodiments disclosed herein: the second voltage regulator includes a field effect transistor controllable based on the drive signal, wherein the field effect transistor is referenced to a second input ground associated with the system and is galvanically isolated from the programmable device.

**In** any one or combination of the embodiments disclosed herein, the system includes: a gate driver powered by a startup voltage; and an isolator powered by the startup voltage, wherein the programmable device is configured to provide the drive signal to the field effect transistor via the gate driver and the isolator.

In any one or combination of the embodiments disclosed herein, the second power supply is galvanically isolated from the second voltage regulator, the first voltage regulator, the first power supply, and the programmable device.

In any one or combination of the embodiments disclosed herein, the system includes: a first current sensing device configured to provide a first sensed current associated with providing the first output voltage; a second current sensing device configured to provide a second sensed current associated with providing the second output voltage, wherein the programmable device is configured to at least one of: generate or modify a first drive signal associated with controlling the first output voltage, based on the first sensed current; and generate or modify a second drive signal associated with controlling the second output voltage, based on the second sensed current.

In any one or combination of the embodiments disclosed herein, the programmable device is configured to at least one of: generate or modify a first drive signal associated with controlling the first output voltage, based on a measurement associated with the first output voltage; generate or modify a second drive signal associated with controlling the second output voltage, based on a measurement associated with the second output voltage.

In any one or combination of the embodiments disclosed herein: the programmable device is configured to: monitor a first frequency and a first duty cycle at associated with the first output voltage; and generate or modify a first drive signal associated with controlling the first output voltage, based on at least one of the first frequency and the first duty cycle; and the programmable device is configured to: monitor a second frequency and a second duty cycle associated with the second output voltage; and generate or modify a second drive signal associated with controlling the second output voltage, based on at least one of the second frequency and the second duty cycle.

In any one or combination of the embodiments disclosed herein, the system includes a control device configured to control one or more functions of the system, wherein the programmable device is included in a portion of the control device.

In any one or combination of the embodiments disclosed herein, the system includes a transformer configured to: generate the first output voltage at a first winding of the transformer based on a first input voltage; and generate the second output voltage at a second winding of the transformer based on a second input voltage, wherein the first winding is galvanically isolated from the second winding.

According to another aspect of the present invention, an apparatus is provided including: a pulse width modulation controller configured to control a first output voltage of a first power supply, wherein the first power supply is referenced to a first input ground and the first output voltage is referenced to a first output ground; and a programmable device configured to configured to control a second output voltage of a second power supply associated with the system, wherein the second power supply is referenced to a second output ground, wherein the programmable device is powered based on the first output voltage.

In any one or combination of the embodiments disclosed herein, the method includes: controlling, by a pulse width modulation controller, a first output voltage of a first power supply associated with a system, wherein the first power supply is referenced to a first input ground associated with a system and the first output voltage is referenced to a first output ground associated with the system; providing the first output voltage to a programmable device; and controlling, by the programmable device, a second output voltage of a second power supply associated with the system, wherein the second power supply is referenced to a second output ground associated with the system.

In any one or combination of the embodiments disclosed herein, the method includes: the pulse width modulation controller is included in a first voltage regulator and is referenced to the first input ground; the method further includes generating and providing, by the programmable device, a drive signal to a second voltage regulator; and generating, by the second voltage regulator, the second output voltage based on the drive signal.

In any one or combination of the embodiments disclosed herein, the method includes: receiving a first input voltage at the first voltage regulator; generating, by the first power supply, the first output voltage based on the first input voltage; receiving a second input voltage at the second voltage regulator; and generating, by the second power supply, the second output voltage based on the second input voltage.

In any one or combination of the embodiments disclosed herein: the programmable device provides the drive signal to a field effect transistor included in the second voltage regulator via a gate driver included in the second voltage regulator and an isolator, wherein the field effect transistor is referenced to a second input ground and is galvanically isolated from the programmable device.

In any one or combination of the embodiments disclosed herein, the method includes: providing, by a first current sensing device, a first sensed current associated with providing the first output voltage; generating or modifying, by the programmable device, a first drive signal associated with controlling the first output voltage, based on the first sensed current; providing, by a second current sensing device, a second sensed current associated with providing the second output voltage; and generating or modifying, by the programmable device, a second drive signal associated with controlling the second output voltage, based on the second sensed current.

In any one or combination of the embodiments disclosed herein, the method includes at least one of: generating or modifying, by the programmable device, a first drive signal associated with controlling the first output voltage, based on a first measurement associated with the first output voltage; and generating or modifying, by the programmable device, a second drive signal associated with controlling the second output voltage, based on a second measurement associated with the second output voltage.

In any one or combination of the embodiments disclosed herein, the method includes: monitoring, by the programmable device, a first frequency and a first duty cycle associated with the first output voltage; generating or modifying, by the programmable device, a first drive signal associated with controlling the first output voltage, based on at least one of the first frequency and the first duty cycle; monitoring, by the programmable device, a second frequency and a second duty cycle associated with the second output voltage; and generating or modifying, by the programmable device, a second drive signal associated with controlling the second output voltage, based on at least one of the second frequency and the second duty cycle.

Additional features and advantages are realized through the techniques of the present invention. Other embodiments and aspects of the invention are described in detail herein and are considered a part of the claimed technical concept. For a better understanding of the invention with the advantages and the features, refer to the description and to the drawings.

### BRIEF DESCRIPTION OF THE DRAWINGS

For a more complete understanding of this invention, reference is now made to the following brief description, taken in connection with the accompanying drawings and detailed description, wherein like reference numerals represent like parts.
FIG. 1 illustrates an example system in accordance with one or more embodiments of the present invention.
FIG. 2 illustrates an example flowchart of a method in accordance with one or more embodiments of the present invention.
FIG. 3 illustrates an example flowchart of a method in accordance with one or more embodiments of the present invention.

### DETAILED DESCRIPTION

A detailed description of one or more embodiments of the disclosed apparatus and method are presented herein by way of exemplification and not limitation with reference to the Figures.

According to one or more embodiments of the present invention, systems and techniques are described herein which support generating multiple isolated power supply rails with more than one isolated input voltage, using a programmable device. The systems and techniques described herein provide improved control over the EMI emission spectrum, power sequencing, voltage monitoring, and precise regulation. Aspects of the techniques described herein may be implemented by change of code/firmware (e.g., at the programmable device), example aspects of which are described with reference to the following figures.

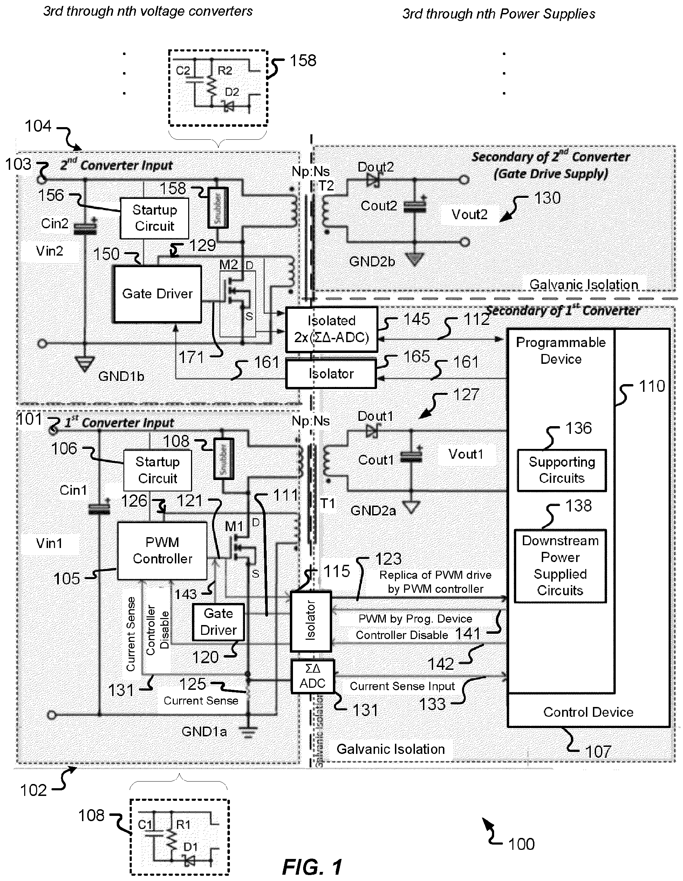

FIG. 1 illustrates an example motor drive system 100 in accordance with one or more embodiments of the present invention. Embodiments of the present invention are not limited to the features illustrated at FIG. 1, and it is to be understood that the motor drive system 100 may include other components supportive of features or operations of the motor drive system 100. Aspects of the present invention support applying the described features of the motor drive system 100 to other power systems including multiple instances of voltage converters.

In accordance with one or more embodiments of the present invention, the motor drive system 100 is capable of generating multiple isolated power supply rails (e.g., isolated power supplies such as, for example, isolated power supply 127, isolated power supply 130, and 3rd through nth isolated power supplies (not illustrated)). The outputs at the power supply rails may also be referred to as output voltage Vout1, output voltage Vout2, and output voltages Vout3 (not illustrated) through Voutn (not illustrated).

The power supply rails are galvanically isolated from both the input power sources which provide the input voltage supplies (input voltage Vin, input voltage Vin2) and from each other. In accordance with one or more embodiments of the present invention, the input voltage supplies are isolated from each other and are referenced to different respective grounds. In accordance with one or more embodiments of the present invention, the power supply rails are implemented without a common reference ground connection.

In some examples, the input voltage Vin1 and the input voltage Vin2 may be 28VDC, but are not limited thereto. For example, the input voltages associated with the motor drive system 100 may be any voltage suitable for operation of components associated with the motor drive system 100.

In some embodiments, the output voltages Vout2 and output voltages Vout3 (not illustrated) through Voutn (not illustrated) may be the same or different. For example, one or more gate drive power supplies described herein (e.g., isolated power supply 130) may be capable of generating and providing an output voltage (e.g., output voltage Vout2) which is the same or different from an output voltage (e.g., output voltage Vout3) generated and provided by one or more other gate drive power supplies (e.g., a 3rd isolated power supply) described herein.

In some embodiments, the output voltages Vout2 through Voutn may respectively include voltages such as, for example, 28VDC, 270VDC, 540VDC, or any voltage suitable for supplying power to a vehicle (e.g., an aircraft), but are not limited thereto. For example, embodiments of the present invention support any output voltages suitable for powering an electronic product.

The motor drive system 100 employs a voltage converter 102 (e.g., a DC-DC converter) (also referred to herein as 1st converter or 1st converter secondary). The voltage converter 102 includes a PWM controller 105 associated with generating isolated power supplies (e.g., isolated power supply 127, isolated power supply 130, 3rd through nth isolated power supplies) and a non-isolated auxiliary supply (e.g., auxiliary supply 126). The auxiliary supply 126 is configured to supply power to circuits (e.g., PWM controller 105, gate driver 120) on the primary side of the motor drive system 100, example aspects of which as described herein. The auxiliary supply 126 is generated at the primary side as a by-product at the secondary winding of transformer T1 (e.g., the lower winding at the primary side of the transformer T1).

The motor drive system 100 includes a transformer. Some example aspects described herein refer to a primary side of the transformer (e.g., left side of the transformer of FIG. 1) and a secondary side of the transformer (e.g., right side of the transformer). The PWM controller 105 may be referred to as a primary side PWM controller, and the programmable device 110 may be referred to as a secondary side PWM controller.

The voltage converter 102 may include aspects of a voltage converter (also referred to herein as a switching regulator) described in IN patent application no. 202411025333 entitled "Programmable Switching Regulator," the contents of which are incorporated herein by reference in their entirety.

According to one or more embodiments of the present invention, the voltage converter 102 includes a PWM controller 105, a startup circuit 106, an input capacitor Cin1, a snubber circuit 108 (e.g., including diode D1, resistor R1, and capacitor C1), a MOSFET M1, an isolator 115, a gate driver 120, a current sense resistor 125, an analog-to-digital conversion (ADC) circuit 131.

The startup circuit 106 is configured to provide a startup voltage to the PWM controller 105 based on the input voltage Vin1.

The snubber circuit 108 (e.g., at resistor R1 and the capacitor C1) are coupled to an input terminal 101 for receiving the input voltage Vin1, a terminal of the input capacitor Cin1, and a terminal of a winding at the primary side of the transformer. The resistor R1 and the capacitor C1 are further coupled to the diode D1. The snubber circuit 108 (e.g., at the diode D1) is further coupled to another terminal of the winding at the primary side of the transformer.

The drain of the MOSFET M1 is coupled to the snubber circuit 108 (e.g., at diode D1) and the other terminal of the winding at the primary side of the transformer. The source of the MOSFET M1 is coupled to the current sense resistor 125, the ADC circuit 131, and the PWM controller 105. The gate of the MOSFET M1 is coupled to the PWM controller 105, the isolator 115, and the gate driver 120.

The input capacitor Cin1 (at another terminal of the input capacitor Cin1) is coupled to the primary ground GND1a. The PWM controller 105 is coupled to a terminal of another winding at the primary side of the transformer.

A diode Dout1 and an output capacitor Cout1 may be associated with the power supply 127. The diode Dout1 is coupled to a terminal of a winding (a secondary winding) at the secondary side of the transformer T1 and an output terminal for providing the output voltage Vout1. The output capacitor Cout1 is coupled to the diode Dout1, another terminal of the winding (secondary winding) at the secondary side of the transformer T1, the output terminal for providing the output voltage Vout, and a ground GND2a associated with the secondary side of the transformer T1 and the output voltage Vout1.

In some aspects, the voltage converter 102 may provide functionality of a flyback regulator. For example, based on the application of an input voltage Vin1, the voltage converter 102 may generate and provide an output voltage Vout1 through a flyback operation governed by PWM controller 105. In accordance with one or more embodiments of the present invention, the output voltage Vout1 may be a regulated voltage. In some cases, the output voltage Vout1 may have some voltage variation.

In accordance with one or more embodiments of the present invention as described herein, the power supply 127 may support a control mechanism in which the programmable device 110 assumes control of the power supply 127 and the voltage converter 102. Descriptions herein with respect to the control of the power supply 127 include control of the voltage converter 102.

A startup sequence associated with the power supply 127 (and voltage converter 102) and a subsequent assumption of control by the programmable device 110 are described herein. In an example, the startup sequence may employ PWM controller 105 for controlling the power supply 127 until the output voltage Vout1 satisfies one or more criteria. The one or more criteria may include, for example, a threshold voltage sufficient for powering the programmable device 110 (e.g., 3.3V or any voltage suitable for the powering components of the programmable device 110). Additionally, or alternatively, the one or more criteria may include a threshold voltage stability associated with the output voltage Vout1.

In an example, when the output voltage Vout1 increases to a value greater than or equal to the threshold voltage, the programmable device 110 may seamlessly assume control over the power supply 127 (and the voltage converter 102). In some alternative and/or additional embodiments, the programmable device 110 may refrain from assuming control over the power supply 127 until the output voltage Vout1 satisfies the threshold voltage stability. It is to be understood that the examples described herein with reference to the programmable device 110 assuming control of the power supply 127 and/or returning control of the power supply 127 to the PWM controller 105 may be based on the threshold voltage and/or the threshold voltage stability described herein. The programmable device 110 may assume or relinquish control over the power supply 127 based on a comparison by the programmable device 110 of the output voltage Vout1 to one or more criteria (e.g., threshold voltage, threshold voltage stability).

For example, the voltage converter 102 is configured such that the PWM controller 105 may provide a gate drive signal 121 both to the MOSFET M1 (also referred to herein as a primary-side MOSFET) of the PWM controller 105 and to (e.g., via isolator 115) the programmable device 110. The gate drive signal 121 may be, for example, a PWM signal associated with controlling the output voltage Vout1. In the example of FIG. 1, the isolator 115 may provide a signal 123 to the programmable device 110 based on the gate drive signal 121 generated by the PWM controller 105, in which the signal 123 is a replica of the gate drive signal 121.

The programmable device 110 may analyze the signal 123. The programmable device 110 may quickly (e.g., within a time duration less than a threshold duration) synchronize the frequency and duty cycle of a PWM generated by (or to be generated by) the programmable device 110 with the received signal 123. The programmable device 110 may output a control signal 141 via a dedicated output pin of the programmable device 110, in which the control signal 141 is of the frequency and duty cycle. The control signal 141 may be referred to as a PWM signal generated by the programmable device 110.

Via the control signal 141, the programmable device 110 may drive the MOSFET M1. For example, the programmable device 110 may drive the MOSFET M1 via the isolator 115 (or another isolator 115 (not illustrated)). That is, for example, the programmable device 110 may provide the control signal 141 to the gate driver 120 via the isolator 115, and the gate driver 120 may provide a corresponding signal (e.g., a high current gate drive 143 corresponding to the control signal 141) to the MOSFET M1.

Accordingly, for example, the programmable device 110 may assume or take over control of the voltage converter 102, via the gate driver 120. That is, for example, the voltage converter 102 and the power supply 127 may support features for disabling the PWM controller 105 once full control of the power supply 127 by the programmable device 110 is established. In an example, the programmable device 110 may generate and output a control signal 142 (also referred to herein as a controller enable/disable signal) associated with disabling the PWM controller 105, via a separate output pin of the programmable device 110. The programmable device 110 may provide the control signal 142 to the PWM controller 105, via the isolator 115. In an example of disabling the PWM controller 105, the programmable device 110 may provide the control signal 142 according to a logic level (e.g., a logic level high) associated with disabling the PWM controller 105.

In an example, the programmable device 110 may output the control signal 142 after providing the control signal 141 to the gate driver 120 via the isolator 115. In another example, the programmable device 110 may output the control signal 142 substantially simultaneous to providing the control signal 141 to the gate driver 120 via the isolator 115. The term "substantially," as used herein, means approximately or actually. The term "substantially simultaneous," as used herein, means approximately or actually at the same time (e.g., within a threshold difference amount).

The programmable device 110 may continuously monitor the output voltage Vout1 and implement closed-loop feedback control associated with maintaining precise regulation of parameters (e.g., output voltage Vout1, current, and the like) of the power supply 127. In some aspects, the programmable device 110 establishes a closed-loop control system in which the programmable device 110 both monitors the output voltage Vout1 and monitors a sensed current (e.g., at current sense resistor 125) with respect to a threshold current.

For example, the voltage converter 102 may be a current-controlled regulator in which a threshold current is set using a current sense resistor 125. The programmable device 110 may adjust the PWM (e.g., adjust the control signal 141) based on whether the sensed current at the current sense resistor 125 is equal to or greater than the threshold current. For example, the programmable device 110 may modify the PWM (e.g., adjust the control signal 141) when the sensed current at the current sense resistor 125 is equal to or greater than the threshold current.

The voltage converter 102 may support providing an analog or digital representation of the sensed current to the programmable device 110. In some embodiments, the voltage converter 102 may utilize the ADC circuit 131 for current sensing and for providing a digital representation of the sensed current to the programmable device 110. The ADC circuit 131 may be an isolated sigma-delta modulator (ADC). The ADC circuit 131 may encode an analog signal (e.g., the sensed current) using high-frequency delta-sigma modulation and apply a digital filter to demodulate the encoded signal to a high-bit digital output signal (also referred to herein as a digital representation) at a lower sampling-frequency. The ADC circuit 131 may provide the signal to the programmable device 110, via the isolator 115. The signal may also be referred to herein as a current sense input provided to (and received at) the programmable device 110.

In some alternative and/or additional embodiments, the voltage converter 102 may support conveying the sensed current to the programmable device 110 through an optocoupler (e.g., using an analog signal corresponding to the sensed current) or a discrete signal corresponding to the sensed current.

In some aspects, for the voltage converter 102, under voltage detection, startup circuitry and auxiliary winding will be referenced to the return path (or primary ground) of the primary side of the transformer. The auxiliary winding is configured to supply power suitable for operation of both the analogue and digital circuits on the primary side.

The power supply 127 and voltage converter 102 may support features for enabling (reenabling) the PWM controller 105 in response to the output voltage Vout1 decreasing to a value below the threshold voltage. In an example, in response to the input voltage Vin1 decreasing to a given value, the output voltage Vout1 may accordingly decrease to below the threshold voltage. In the example of enabling (reenabling) the PWM controller 105, in response to detecting the output voltage Vout1 is below the threshold voltage, the programmable device 110 may provide the control signal 142 according to a second logic level (e.g., a logic level low) associated with enabling the PWM controller 105, and the programmable device 110 may discontinue from providing the control signal 141 to the gate driver 120.

The PWM controller 105, in response to the control signal 142 of the second logic level, may resume control of the power supply 127 and the voltage converter 102. In some other embodiments, the programmable device 110 may refrain from sending any control signal 142, and in response to detecting that no control signal 142 is being sent by the programmable device 110, the PWM controller 105 may resume control of the power supply 127 and the voltage converter 102. For example, the PWM controller 105 may resume providing gate drive signal 121 to the MOSFET M1 and/or to the programmable device 110.

According to one or more embodiments of the present invention, the programmable device 110 may remain in a standby state when the output voltage Vout1 is below the threshold value. The programmable device 110 may enter an active state (e.g., associated with controlling the power supply 127 as described herein) (or alternatively, a powered on state) when the output voltage Vout1 is greater than or equal to the threshold value. For example, the threshold value may be a voltage value at which circuitry of the programmable device 110 powers on. In some aspects, the programmable device 110 may return to the standby state when the output voltage Vout1 decreases to a value below the threshold value. The standby state may be, for example, a low power state or a powered off state. The active state may be, for example, a powered on state.

According to one or more embodiments of the present invention, the PWM controller 105 may enter a standby state in response to receiving the control signal 142 according to the logic level (e.g., a logic level high) associated with disabling the PWM controller 105. The PWM controller 105 may enter or return to an active state associated with controlling the output voltage Vout1 in response to receiving the control signal 142 according to the logic level (e.g., a logic level low) associated with enabling the PWM controller 105. Additionally, or alternatively, the PWM controller 105 may enter or return to the active state in response to the programmable device 110 refraining from sending any control signal 142. The standby state may be, for example, a low power state or a powered off state. The active state may be, for example, a powered on state.

The voltage converter 104 may include aspects of a voltage converter described in IN patent application no. 202411028006 entitled "Gate Drive Power Supply Using Programmable Device In Motor Drive Application," the contents of which are incorporated herein in their entirety by reference.

Aspects of the voltage converter 104 are described herein. The voltage converter 104 includes an isolator 165, a gate driver 150, a startup circuit 156, and an isolated ADC 145. In some aspects, ADC 145 is an isolated sigma-delta modulator. The voltage converter 104 further includes an input capacitor Cin2, a snubber circuit 158 (e.g., including diode D2, resistor R2, and capacitor C2), and a MOSFET M2.

The startup circuit 156 is configured to provide a startup voltage to the gate driver 150 based on the input voltage Vin2.

The snubber circuit 158 (e.g., at resistor R2 and the capacitor C2) are coupled to the input terminal 103 for receiving the input voltage Vin2, a terminal of the input capacitor Cin2, and a terminal of a winding at the primary side of the transformer. With respect to the snubber circuit 158, the resistor R2 and the capacitor C2 are further coupled to the diode D2, and the snubber circuit 158 (e.g., at the diode D2) is further coupled to another terminal of the winding at the primary side of the transformer.

The drain of the MOSFET M2 is coupled to the diode D2 and the other terminal of the winding at the primary side of the transformer. The source of the MOSFET M2 is coupled to primary ground GND1b. The gate of the MOSFET M2 is coupled to the gate driver 150 and the ADC 145. The input capacitor Cin2 (at another terminal of the input capacitor Cin2) is coupled to the primary ground GND1b.

The Dout2 is coupled to a terminal of a winding (a secondary winding) at the secondary side of the transformer T2 and an output terminal for providing the output voltage Vout2. The output capacitor Cout2 is coupled to the diode Dout2, another terminal of the winding (secondary winding) at the secondary side of the transformer T2, the output terminal for providing the output voltage Vout2, and a ground GND2b associated with the secondary side of the transformer T2 and the output voltage Vout2.

In accordance with one or more embodiments of the present invention, the output voltage Vout2 may be a regulated voltage. In some cases, the output voltage Vout2 may have some voltage variation.

The 3rd through nth voltage converters (not illustrated) may include aspects of the voltage converter 104, and repeated descriptions of like elements are omitted for brevity. The 3rd through nth power supplies (also referred to herein as 3rd through nth isolated power supplies) (not illustrated) may include aspects of the isolated power supply 130, and repeated descriptions of like elements are omitted for brevity.

In the examples described herein, the voltage converter 104 and 3rd through nth voltage converters are DC-DC voltage converters. However, aspects of the present invention are not limited to DC-DC voltage conversion. For example, aspects of the voltage converter 104 and 3rd through nth voltage converters described herein may be applied to an AC-DC converter (also referred to herein as a rectifier), a DC-AC converter (also referred to herein as an inverter), and/or an AC-AC frequency converter (also referred to herein as a transformer).

The motor drive system 100 uses the output voltage Vout1 produced by the voltage converter 102 (1st converter) to power the programmable device 110. As described herein, the programmable device 110 may be an FPGA or a microcontroller unit (MCU).

The programmable device 110 may generate drive signals 111 for driving metal oxide silicon field effect transistors (MOSFETs) of multiple DC-DC Converters (e.g., MOSFET M2 of voltage converter 104 and/or respective MOSFETs of 3rd through nth voltage converters).

According to one or more embodiments of the present invention, the placement of the programmable device 110 is in a ground plane different from the ground plane of the primary side of the motor drive system 100, and the motor drive system 100 supports achieving isolation for drive signals (e.g., drive signals 111, drive signals 161) through use of an isolator (e.g., isolator 115, isolator 165) or optocoupler. Accordingly, for example, the motor drive system 100 supports conveying drive signals (e.g., drive signals 111, drive signals 161) through the isolator (e.g., isolator 115, isolator 165) or optocoupler.

The motor drive system 100 supports a closed loop feedback system. For example, the motor drive system 100 supports voltage and current monitoring using non-isolated ADC and/or isolated ADC as applicable to form close loop operation. For example, the motor drive system 100 includes a closed loop formed for voltage regulation, in which the programmable device 110 is configured to receive voltage feedback signals and current feedback signals associated with the voltage converter 104 via ADC 145 and a current interface 112.

Voltage feedback may refer to readings of the voltage levels of each power supply rail on the secondary side of each converter, by means of an ADC or other suitable conversion mechanism. Current feedback refers to the current being drawn from each rail on the secondary side of each converter. A non-limiting example of obtaining current feedback includes connecting a low value resistor to a rail and measuring the voltage drop across the resistor by means of an ADC. A non-limiting example of obtaining current feedback includes using a Hall Effect sensor, which employs the Hall Magnetic Field effect, such that the sensor produces an output voltage proportional to the input current passing through the sensor. The voltage may be measured using ADCs.

In some aspects, the voltage feedback signals (voltage monitoring signals) are referenced to primary ground GND1b, and the current feedback signals (current monitor signals) are referenced to a secondary ground. For example, current feedback signals associated with output voltage Vout2 are referenced to secondary ground GND2b, and current feedback signals associated with output voltage Vout1 are referenced to secondary ground GND2a.

Aspects of the closed loop feedback described with reference to programmable device 110 and voltage converter 104 may be extended to other voltage converters (e.g., 3rd through nth voltage converters, excluding voltage converter 102). In accordance with one or more embodiments of the present invention, input ground references of the other voltage converters (e.g., voltage converter 104 and 3rd through nth voltage converters) may be different from the input ground reference (e.g., primary ground GND1a) associated with the primary side of the motor drive system 100. Aspects of the closed loop feedback support and facilitate coordinated operation and power sequencing among the voltage converter 104 and 3rd through nth voltage converters and among the isolated power supply 130 and 3rd through nth power supplies. Accordingly, for example, based on the closed loop feedback, the motor drive system 100 may be implemented without separate voltage monitoring.

The programmable device 110 is capable of driving the PWM pulse at the primary side of the voltage converter 104 (DC-DC converter) interfaced with input voltage Vin2. In accordance with one or more embodiments of the present invention with reference to motor drive system 100, the ground GND1b is an isolated ground, and the programmable device 110 may drive the MOSFET M2 via an isolator 165 (isolated discrete ADC). The programmable device 110 may monitor voltage and current for closed loop operation via, for example, the ADC 145 (isolated delta-sigma ADC). That is, for example, the motor drive system 100 supports using an isolated discrete and an isolated delta-sigma ADC for driving MOSFET and monitoring voltage and current for closed loop operation.

In some aspects, the programmable device 110 may be implemented by a portion of (e.g., programmable circuitry included) in a control device 107 associated with the motor drive system 100. For example, the control device 107 may support intelligent control of operations of the motor drive system 100. In some cases, the operations may be associated with an electronic device (e.g., an electronic product, a motor drive electronics product) (not illustrated) including the motor drive system 100.

With reference to flyback operation of the voltage converter 102, gate driver 120 and isolator 115 are initially powered by the startup circuit 106 when Vin1 is applied. Once the gate driver 120 is triggered by the programable device 110, voltage is generated in all windings of the transformer T1. The auxiliary winding at the primary side of the transformer T1 also generates a voltage (e.g., auxiliary supply 126 described herein). The auxiliary supply 126 powers the gate driver 120 and isolator 115.

With reference to flyback operation of the voltage converter 104, gate driver 150 and isolator 165 are initially powered by the startup circuit 156 when Vin2 is applied. Once the gate driver 150 is triggered by the programable device 110, voltage is generated in all windings of the transformer T2. The auxiliary winding at the primary side of the transformer T2 also generates a voltage (e.g., auxiliary supply 129 described herein). The auxiliary supply 129 powers the gate driver 150 and isolator 165.

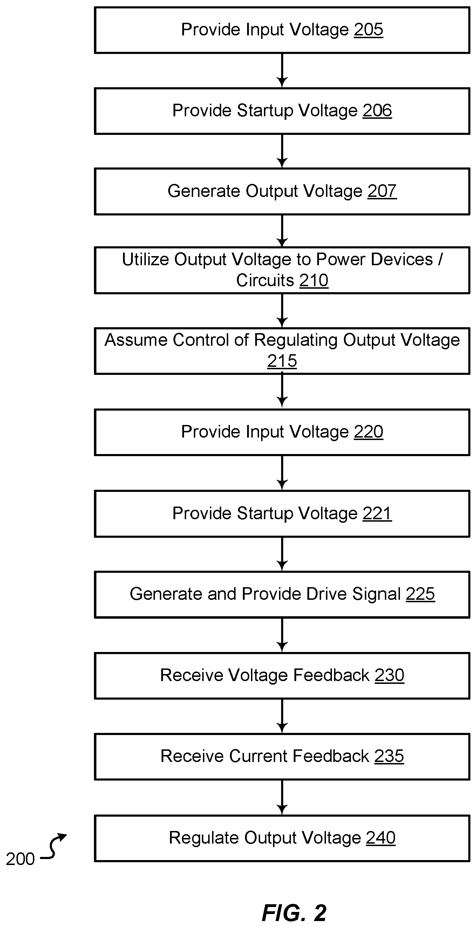

Example aspects supportive of a method of driving multiple power supplies (e.g., isolated power supply 130 and 3rd through nth power supplies) converted with galvanically isolated input voltage and galvanically isolated output voltages from a programmable device (e.g., programmable device 110) are described herein with reference to FIGS. 1 and 2. Aspects of driving the isolated power supply 130 as described with reference to voltage converter 104 and programmable device 110 may similarly be applied to the 3rd through nth voltage converters and 3rd through nth power supplies.

FIG. 2 illustrates an example flowchart of a method 200 in accordance with one or more embodiments of the present invention. The method 200 may be implemented by the example aspects of the motor drive system 100 described herein.

At 205, the method 200 may include providing input voltage Vin1 to the voltage converter 102 (1st converter), which is driven by PWM controller 105 (also referred to herein as a PWM controller IC) described herein.

In accordance with one or more embodiments of the present invention, the PWM controller 105 may be powered by a voltage derived from the startup circuit 106. For example, at 206, the startup circuit 106 may provide a startup voltage to the PWM controller 105 based on the input voltage Vin1. That is, for example, the startup circuit 106 may provide an initial power to the PWM controller 105 based on the input voltage Vin1.

At 207, based on the input voltage Vin1, the voltage converter 102 (1st converter) may generate an output voltage Vout1. For example, the voltage converter 102 may generate an power supply 127 referenced to a secondary winding of the transformer T1 and an isolated power supply 130 referenced to a secondary winding of the transformer T2. In some aspects, the power supply 127 is referenced to the ground GND2a of the motor drive system 100. In some examples, providing the input voltage Vin1 as described with reference to 205 may be an initial step of the method 200, but aspects of the present invention are not limited thereto. As described herein, the power supply 127 may be a non-isolated power supply.

At 210, the method 200 may include utilizing the output voltage Vout1 produced by the voltage converter 102 (1st converter) to power the programmable device 110, supporting circuits 136, and downstream power supplied circuits 138. As described herein, the programmable device 110 may be an FPGA or a microcontroller unit (MCU).

In some aspects, the auxiliary supply 126 generated at auxiliary winding of transformer T1 (lower winding on the primary side of transformer T1) powers one or more circuits on the primary side of the voltage converter 102. For example, the auxiliary supply 126 may power the PWM controller 105 and the gate driver 120. In some aspects, the auxiliary supply 129 generated at auxiliary winding of transformer T2 (lower winding on the primary side of transformer T2) powers one or more circuits on the primary side of the voltage converter 104. For example, the auxiliary supply 129 may power the gate driver 150.At 215, the method 200 may include the programmable device 110 assuming control of regulating the output voltage Vout1 from the PWM controller 105 as described herein.

In an example, the PWM controller 105 may be the main controller for controlling the power supply 127 until the output voltage Vout1 satisfies one or more criteria (e.g., threshold voltage sufficient for powering the programmable device 110, threshold voltage stability associated with output voltage Vout1) described herein.

In an example, in response to the output voltage Vout1 increasing to a value greater than or equal to the threshold voltage, the programmable device 110 may seamlessly assume control over the power supply 127 (and the voltage converter 102). In some alternative and/or additional embodiments, the programmable device 110 may assume control over the power supply 127 in response to the output voltage Vout1 increasing to a value greater than or equal to the threshold voltage and the output voltage Vout1 satisfying the threshold voltage stability.

In association with the programmable device 110 assuming control of the power supply 127, the PWM controller 105 may provide the gate drive signal 121 (also provided by the PWM controller 105 to the MOSFET M1) to (e.g., via isolator 115) the programmable device 110. In the example of FIG. 1, the isolator 115 may provide a signal 123 to the programmable device 110 based on the gate drive signal 121 generated by the PWM controller 105, in which the signal 123 is a replica of the gate drive signal 121.

The programmable device 110 may analyze the signal 123. The programmable device 110 may quickly (e.g., within a time duration less than a threshold duration) synchronize the PWM frequency and duty cycle of a control signal 141 generated by (or to be generated by) the programmable device 110 with the received signal 123.

The programmable device 110 may output the control signal 141 (also referred to herein as a drive signal) via a dedicated output pin of the programmable device 110, in which the control signal 141 is of the PWM frequency and duty cycle. The control signal 141 may be referred to as a PWM signal generated by the programmable device 110. Via the control signal 141, the programmable device 110 may drive the MOSFET M1 as described herein.

In an example, the programmable device 110 may generate and output a control signal 142 (also referred to herein as a controller enable/disable signal) associated with disabling the PWM controller 105, via a separate output pin of the programmable device 110. In some examples, the programmable device 110 may output the control signal 142 in association with disabling the PWM controller 105, once full control by the programmable device 110 has been established.

The programmable device 110 may continuously monitor the output voltage Vout1 and current (e.g., through ADC circuit 131 (isolated ΣΔ-ADC)), and the programmable device 110 may continuously implement closed-loop feedback control associated with maintaining precise regulation of parameters (e.g., output voltage Vout1, current, and the like) of the power supply 127 as described herein. Accordingly, for example, 207 of the method 200 includes the programmable device 110 taking over regulation of the voltage converter 102 from the PWM controller 105.

Referring to the example illustrated at FIG. 1, in some embodiments, isolator 115, ADC circuit 131, ADC 145, and isolator 165 may overlap the primary side and the secondary side of the motor drive system 100. Expressed another way, isolator 115 and ADC 145 are located between the primary and secondary sides (e.g., on the isolation boundary between the primary and secondary sides).

At 220, the method 200 may include providing input voltage Vin2 to the voltage converter 104 (2nd converter).

In accordance with one or more embodiments of the present invention, the gate driver 150 may be powered by a voltage derived from the startup circuit 106. For example, at 221, the startup circuit 106 may provide a startup voltage to the gate driver 150 based on the input voltage Vin2. That is, for example, the startup circuit 106 may provide an initial power to the gate driver 150 based on the input voltage Vin2.

It is to be understood that embodiments of the present invention support providing the input voltage Vin2 (at 220) and the startup voltage (at 221) earlier in the method 200 compared to the example described herein. For example, the method 200 may include providing the input voltage Vin2 at 205 (e.g., simultaneous to providing the input voltage Vin1). In the example, at 206, the method 200 may include providing the startup voltage to gate driver 150 based on the input voltage Vin2. Accordingly, for example, the input voltage Vin2 and the input voltage Vin1 may be present from the start of the method 200.

At 225, the method 200 may include employing the programmable device 110 to drive the MOSFETs of multiple DC-DC Converters. For example, with reference to voltage converter 104, at 225, the programmable device 110 may generate and provide a drive signal 161 (also referred to herein as a MOSFET drive signal) to the MOSFET M2 of the voltage converter 104, via the isolator 165 and gate driver 150. In some aspects, the drive signal 161 generated and provided by the gate driver 150 may be an amplified representation of the drive signal 161.

In some other examples, the programmable device 110 may provide respective drive signals (not illustrated) to the MOSFETs of other voltage converters (e.g., 3rd through nth voltage converters) (not illustrated) included in the primary side of the motor drive system 100, via other isolators (not illustrated) and gate drivers respective to the other voltage converters. The additional drive signals, isolators, and gate drivers may include aspects of drive signal 161, isolator 165, and gate driver 150, and repeated descriptions of like elements are omitted for brevity.

In some aspects, the isolator(s) 115 and isolator(s) 165 may be implemented by the motor drive system 100 for exchange of discrete signals (e.g., signal 123, control signal 141, control signal 142, drive signals 161). In some aspects, the ADC circuit 131 (isolated ΣΔ ADC) and the ADC 145 (isolated ΣΔ-ADC) may be implemented by the motor drive system 100 for voltage and current measurement.

In some embodiments, the voltage converter 104 and the 3rd through nth voltage converters may be implemented with a gate driver (e.g., gate driver 150 as described with reference to voltage converter 104) (also referred to herein as gate drive IC) between an isolator (e.g., an isolator 165 as described with reference to voltage converter 104) and a target MOSFET (e.g., MOSFET M2 as described with reference to voltage converter 104, MOSFET M3 (not illustrated), MOSFET M4 (not illustrated), and the like). For example, the programmable device 110 generates drive signal 161 specifically to drive gate driver 150. The programmable device 110 may generate a drive signal specifically to drive a gate driver associated with 3rd voltage converter, generate a drive signal specifically to drive a gate driver associated with nth voltage converter, and the like. The gate drivers described herein may support improved performance. For example, with reference to voltage converter 104, the gate driver 150 may provide a drive signal 171 (e.g., a high current gate drive) to the MOSFET M2, in which the drive signal 171 corresponds to the drive signal 161. In some other embodiments, the voltage converter 104 and/or one or more of the other voltage converters (e.g., 3rd through nth voltage converters described herein) may be implemented without a gate driver.

According to one or more embodiments of the present invention, the programmable device 110 may monitor the voltage and current with the help of isolated Sigma-Delta ADC. That is, for example, the programmable device 110 may monitor the output voltage Vout1. The programmable device 110 may monitor the sensed current associated with current sense resistor 125 via the ADC circuit 131 and current sense interface 133.

In an example, after a given quantity of PWM pulses (e.g., three PWM pulses), enough voltage may be generated in the auxiliary winding of the transformer T2, in which the auxiliary winding is referenced to primary ground GND1b. Accordingly, for example, auxiliary supply 129 is configured to supply power to circuits on the primary side of the motor drive system 100. For example, the auxiliary supply 129 is configured to supply power to circuitry (e.g., gate driver 150) on the primary side of the voltage converter 104 (2nd converter).

Aspects of the method 200 associated with driving the voltage converter 104 (DC-DC converter) interfaced with the input voltage Vin2 are now described herein. On the primary side (also referred to herein as 2nd primary) of the isolated power supply 130, which is galvanically isolated from all other rails discussed herein, a drive pulse associated with driving MOSFET M2 is transmitted by the programmable device 110 through isolator 165.

That is, for example, at 225, employing the programmable device 110 to drive the MOSFETs may include providing, by the programmable device 110 and via isolator 165, a drive signal 161 associated with driving the MOSFET M2. In some aspects, the method 200 may include providing a drive signal 171, generated by the gate driver 150 based on the drive signal 161, to the MOSFET M2.

At 230, the method 200 may include receiving, at the programmable device 110, voltage feedback. For example, the programmable device 110 may receive signals from the ADC 145 via current interface 112. ADC 145 includes two ADCs (e.g., "2x" of ΣΔ-ADCs). In some aspects, the motor drive system 100 may use the first ADC for voltage feedback and use the second ADC for current feedback by the programmable device 110.

At 235, the method 200 may include, similar to voltage feedback sensing, achieving current feedback by sensing the current at the primary side of the voltage converter 104 (gate driver DC-DC converter) and third through nth converters (gate driver DC-DC converters) (not illustrated). For example, at the voltage converter 104, the motor drive system 100 may include a current sense resistor (not illustrated) coupled between the source of the MOSFET M2 and the primary ground GND1b. In another example, at the 3rd through nth voltage converters (not illustrated), the motor drive system 100 may include current sense resistors (not illustrated) respectively coupled between the sources of the MOSFETs (not illustrated) of the 3rd through nth voltage converters and respective primary grounds of the 3rd through nth voltage converters.

The 3rd through nth voltage converters may include aspects of voltage converter 104 described herein, and repeated descriptions of like elements are omitted for brevity. Respective isolated power supplies (not illustrated) associated with the 3rd through nth voltage converters may include aspects of the isolated power supply 130 described herein, and repeated descriptions of like elements are omitted for brevity.

Accordingly, for example, the method 200 may include monitoring voltage at output voltage Vout2 with respect to a threshold voltage and monitoring sensed current (e.g., through current feedback) with respect to a threshold current. According to one or more embodiments of the present invention, the programmable device 110 forms a closed loop feedback system with both the voltage feedback and current feedback described herein.

At 240, the method 200 may include to regulating gate driver 150 of the voltage converter 104 based on the voltage feedback associated with output voltage Vout2 and the current feedback associated with the voltage converter 104. That is, for example, at 240, the programmable device 110 may regulate the output voltage Vout2 based on the voltage feedback and/or the current feedback, by modifying the drive signal 161. In an example, the programmable device 110 may modify the switching frequency and/or PWM pattern associated with the drive signal 161, which may result in a modified switching frequency and/or PWM pattern of the drive signal 171 output by the gate driver 150.

Additionally, or alternatively, for example, at 240, the method 200 may include regulating gate drivers of one or more of the 3rd through nth voltage converters based on voltage feedback respectively associated with output voltages of the 3rd through nth voltage converters and/or current feedback respectively associated with the 3rd through nth voltage converters. Regulating gate drivers of one or more of the 3rd through nth voltage converters may include regulating respective output voltages of the 3rd through nth voltage converters. Regulating gate drivers of one or more of the 3rd through nth voltage converters may include aspects of regulating gate driver 150, and repeated descriptions of like elements are omitted for brevity.

In accordance with one or more embodiments of the present invention, the motor drive system 100 utilizes a common controller (e.g., the programmable device 110) for driving voltage converter 104 and/or any of the 3rd through nth voltage converters, which enables improved coordination, power sequencing, emission control, and the like among multiple voltage converters of the motor drive system 100.

In some aspects, given that the programmable device 110 is capable of monitoring the output voltages among the multiple voltage converters of the motor drive system 100, the motor drive system 100 may be implemented without additional hardware circuitry for separate monitoring of the voltage rails. For example, in accordance with one or more embodiments of the present invention, the programmable device 110 is capable of monitoring the voltage at the primary (e.g., 28VDC input, 270VDC/540VDC) by correlating the duty cycle and the secondary voltage(s) (e.g., output voltage Vout1, output voltage Vout2), measured current, and transformer ratio.

Under voltage detection, startup circuitry, and auxiliary winding will be referenced to the return path (or primary ground GND) of the primary side of the transformer. The auxiliary winding (e.g., auxiliary supply 126) may supply the power for both the analog and digital circuits on the primary side, as suitable for operation of the analog and digital circuits.

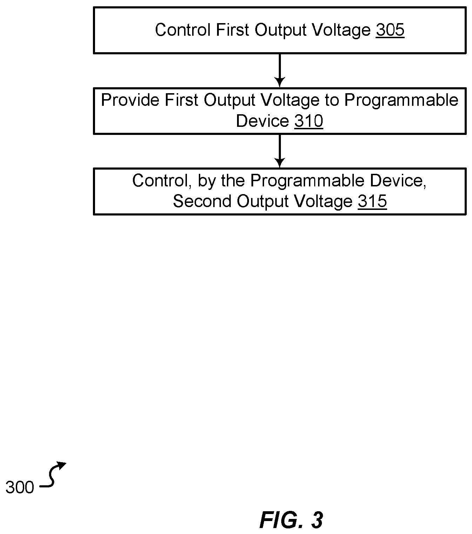

FIG. 3 illustrates an example flowchart of a method 300 in accordance with one or more embodiments of the present invention. The method 300 may be implemented by the example aspects of the motor drive system 100 described herein.

At 305, the method 300 may include controlling, by a pulse width modulation controller, a first output voltage of a first power supply associated with a system, where the first power supply is referenced to a first input ground associated with a system and the first output voltage is referenced to a first output ground associated with the system.

At 310, the method 300 may include providing the first output voltage to a programmable device.

At 315, the method 300 may include controlling, by the programmable device, a second output voltage of a second power supply associated with the system, where the second power supply is referenced to a second output ground associated with the system.

**In** some aspects, the pulse width modulation controller is included in a first voltage regulator and is referenced to the first input ground. **In** some aspects, the method 300 may include generating and providing, by the programmable device, a drive signal to a second voltage regulator; and generating, by the second voltage regulator, the second output voltage based on the drive signal.

**In** some aspects, the method 300 may include: receiving a first input voltage at the first voltage regulator; generating, by the first power supply, the first output voltage based on the first input voltage; receiving a second input voltage at the second voltage regulator; and generating, by the second power supply, the second output voltage based on the second input voltage.

In some aspects, the programmable device provides the drive signal to a field effect transistor included in the second voltage regulator via a gate driver included in the second voltage regulator and an isolator, where the field effect transistor is referenced to a second input ground and is galvanically isolated from the programmable device.

In some aspects, the method 300 may include providing, by a first current sensing device, a first sensed current associated with providing the first output voltage; generating or modifying, by the programmable device, a first drive signal associated with controlling the first output voltage, based on the first sensed current; providing, by a second current sensing device, a second sensed current associated with providing the second output voltage; and generating or modifying, by the programmable device, a second drive signal associated with controlling the second output voltage, based on the second sensed current.

In some aspects, the method 300 may include generating or modifying, by the programmable device, a first drive signal associated with controlling the first output voltage, based on a first measurement associated with the first output voltage; and generating or modifying, by the programmable device, a second drive signal associated with controlling the second output voltage, based on a second measurement associated with the second output voltage.

In some aspects, the method 300 may include monitoring, by the programmable device, a first frequency and a first duty cycle associated with the first output voltage; generating or modifying, by the programmable device, a first drive signal associated with controlling the first output voltage, based on at least one of the first frequency and the first duty cycle; monitoring, by the programmable device, a second frequency and a second duty cycle associated with the second output voltage; and generating or modifying, by the programmable device, a second drive signal associated with controlling the second output voltage, based on at least one of the second frequency and the second duty cycle.

In the descriptions of the flowcharts herein, the operations may be performed in a different order than the order shown, or the operations may be performed in different orders or at different times. Certain operations may also be left out of the flowcharts, one or more operations may be repeated, or other operations may be added to the flowcharts.

As described herein, aspects of the motor drive system 100 present significant advancements and advantages in power supply and voltage converter design.

Dynamic Emission Spectrum Control: In contrast to hardware with fixed EMI characteristics, the techniques described herein grant granular control over the emission spectrum. By leveraging the capabilities of a programmable device (e.g., programmable device 110), the techniques described herein support dynamically adjusting the switching frequency and patterns, effectively spreading peak emissions and mitigating the impact of peak emissions on specific frequencies. The capabilities support meeting stringent EMI regulations and reducing overall noise pollution without modifying hardware, more so when multiple switching regulators are involved in an application such as, for example, a motor drive system.

The motor drive system 100 provides dynamic control over both switching frequency and pulse width modulation (PWM) pattern of DC-DC converters (e.g., voltage converter 104, 3rd through nth voltage converters described herein), enabling precise voltage regulation and reducing peak emissions at specific frequencies. The motor drive system 100 supports tunable voltage regulation as described herein.

Power Sequencing: The configuration of the motor drive system 100 enables synchronized functioning, orderly power sequencing, and reduces or eliminates dependence on circuits for independent voltage monitoring.

Prognostic and Health Monitoring: The motor drive system 100 and techniques described herein support comprehensive recording by the programmable device 110 of performance data of the power supply 130 (and 3rd through nth power supplies), which the programmable device 110 is controlling, for prognostic and health monitoring purposes. That is, for example, the systems and techniques described herein support opportunities for comprehensive data logging which facilitates superior prognostics (e.g., associated with predicting issues) and capabilities for monitoring health of the motor drive system 100 over time.

Other non-limiting examples of the monitoring include monitoring change in PWM or duty cycle compared to regular operation, monitoring change in response time of the power supply components, continuous monitoring of supply generation by the power supplies described herein, and continuous built-in testing (CBIT) for voltage rails without any additional circuitry. Use of the programmable device 110 as described herein provides opportunities for prognostic and health monitoring. For example, the programmable device 110 is capable of monitoring frequency and duty cycle of input nodes (e.g., input terminal 101, input terminal 103) associated with the primary side of the motor drive system 100.

The motor drive system 100 and techniques described herein support reduced dependency on PWM controller ICs provided by vendors. For example, the motor drive system 100 and techniques described herein provide independence from restricting features of voltage converters (e.g., voltage converter 104, 3rd through nth voltage converters) of the motor drive system 100 to features provided by vendor provided PWM controllers (e.g., PWM controller 105). That is, for example, the systems and techniques described herein support eliminating or reducing reliance on the features of a vendor provided, primary side control PWM controller (e.g., PWM controller 105 described herein), enabling more resilient designs with improved control over supplies, increased design options, and increased flexibility. Accordingly, for example, the motor drive system 100 and techniques described herein overcome problems in which features of PWM controllers (e.g., PWM controller 105) are confined to the selected IC for the switching regulator, restricting the capabilities of a power supply.

In some aspects, the motor drive system 100 (e.g., through the programmable device 110) exhibits dynamic control over both switching frequency and PWM pattern, enabling precise voltage regulation and reducing peak emissions at specific frequencies. The motor drive system 100 (e.g., through the programmable device 110) can leverage various techniques to address EMI concerns by dynamically modulating the switching frequency within a specified range, dispersing peak emissions, and mitigating the impact of the peak emissions at discrete frequencies.

The motor drive system 100 and techniques described herein overcome problems affecting other PWM controllers such as, for example, limitations by the other PWM controllers for controlling the switching frequency during duty cycle adjustments. Such limitations by the other PWM controllers restrict opportunities to achieve an adjustable electromagnetic interference (EMI) spectrum without implementing hardware modifications for improved EMI-EMC compliance. Such limitations by the other PWM controllers restrict opportunities for selecting more cost-effective and easily available components for a system. The motor drive system 100 and techniques described herein support capabilities for adjusting EMI spectrum without implementing hardware modifications for improved EMI-EMC compliance. The motor drive system 100 and techniques described herein support the selection more cost-effective and easily available components for a system for providing power.

The motor drive system 100 and techniques described herein support minimizing the effect of temperature on a PWM controller because the control loop described herein may be implemented in software/firmware (e.g., at programmable device 110) instead of in hardware inside a non-reconfigurable PWM controller.

The systems and techniques described herein overcome disadvantages of other approaches for generating multiple isolated power supply rails with more than one isolated input voltage. Disadvantages overcome by the systems and techniques described herein include limited control on power sequencing, a challenge which may arise when power regulators are generating power supplies which are referenced to isolated reference ground planes. Other disadvantages overcome by the systems and techniques described herein include vendor dependence. For example, cases in which designers are tied to specific vendors for the PWM controller may limit options and flexibility.

Other disadvantages overcome by the systems and techniques described herein include limited features of PWM controllers. For example, in some cases, the features of PWM controllers may be confined to an IC selected for the switching regulator, restricting the capabilities of the power supply. Other disadvantages overcome by the systems and techniques described herein include an absence of prognostic and health monitoring. For example, other systems fail to provide an opportunity for prognostic and health monitoring, which means the systems lack the ability to predict issues or monitor system health over time.

The term "about" is intended to include the degree of error associated with measurement of the particular quantity based upon the equipment available at the time of filing the application.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made a without departing from the scope of the present invention as defined by the claims. In addition, many modifications may be made to adapt a particular situation or material to the teachings of the present invention without departing from the scope of the claims. Therefore, it is intended that the present invention not be limited to the particular embodiment disclosed, but that the present invention will include all embodiments falling within the scope of the claims.

## Claims

1. An apparatus comprising:
a pulse width modulation controller (105) configured to control a first output voltage of a first power supply (127), wherein the first power supply is referenced to a first input ground and the first output voltage is referenced to a first output ground; and
a programmable device (110) configured to configured to control a second output voltage of a second power supply (130), wherein the second power supply is referenced to a second output ground,
wherein the programmable device is powered based on the first output voltage

2. A system comprising:
the apparatus of claim 1, the first power supply (127) associated with the system, the first input ground associated with the system (130), the second power supply associated with the system, and the second output ground associated with the system.

3. The apparatus of claim 1 or the system of claim 2, further comprising:
a first voltage regulator (102) comprising the pulse width modulation controller, wherein the pulse width modulation controller is referenced to the first input ground; and
a second voltage regulator (104),
wherein:
the programmable device is configured to generate and provide a drive signal to the second voltage regulator in association with controlling the second output voltage; and
the second output voltage is based on the drive signal, and optionally
wherein:
the first output voltage at the first power supply is based on a first input voltage received at the first voltage regulator; and
the second output voltage at the second power supply is based on a second input voltage received at the second voltage regulator.

4. The apparatus or the system of claim 3, further comprising:
a first startup circuit (106) configured to provide a first startup voltage to one or more circuits of the first voltage regulator based on a first input voltage received at the first voltage regulator; and
a second startup circuit (156) configured to provide a second startup voltage to one or more circuits of the second voltage regulator based on a second input voltage received at the second voltage regulator.

5. The apparatus or the system of claim 3 or 4, wherein:
the second voltage regulator comprises a field effect transistor (M2) controllable based on the drive signal, wherein the field effect transistor is referenced to a second input ground associated with the system and is galvanically isolated from the programmable device, and optionally further comprising:
a gate driver (150) powered by a startup voltage; and
an isolator (165) powered by the startup voltage,
wherein the programmable device is configured to provide the drive signal to the field effect transistor via the gate driver and the isolator.

6. The apparatus or the system of any of claims 3 to 5, wherein the second power supply (130) is galvanically isolated from the second voltage regulator (104), the first voltage regulator (102), the first power supply (127), and the programmable device (110).

7. The apparatus or the system of any preceding claim, further comprising:
a first current sensing device (125) configured to provide a first sensed current associated with providing the first output voltage;
a second current sensing device configured to provide a second sensed current associated with providing the second output voltage,
wherein the programmable device (110) is configured to at least one of:
generate or modify a first drive signal associated with controlling the first output voltage, based on the first sensed current; and
generate or modify a second drive signal associated with controlling the second output voltage, based on the second sensed current.

8. The apparatus or the system of any preceding claim, wherein the programmable device is configured to at least one of:
generate or modify a first drive signal associated with controlling the first output voltage, based on a measurement associated with the first output voltage;
generate or modify a second drive signal associated with controlling the second output voltage, based on a measurement associated with the second output voltage; or
wherein:
the programmable device is configured to:
monitor a first frequency and a first duty cycle at associated with the first output voltage; and
generate or modify a first drive signal associated with controlling the first output voltage, based on at least one of the first frequency and the first duty cycle; and
the programmable device is configured to:
monitor a second frequency and a second duty cycle associated with the second output voltage; and
generate or modify a second drive signal associated with controlling the second output voltage, based on at least one of the second frequency and the second duty cycle.

9. The system of claim 2 or any claim dependent thereon, further comprising a control device (107) configured to control one or more functions of the system, wherein the programmable device is comprised in a portion of the control device.

10. The apparatus or the system of any preceding claim, further comprising a transformer configured to:
generate the first output voltage at a first winding of the transformer based on a first input voltage; and
generate the second output voltage at a second winding of the transformer based on a second input voltage,
wherein the first winding is galvanically isolated from the second winding.

11. A method comprising:
controlling, by a pulse width modulation controller (105), a first output voltage of a first power supply (127) associated with a system, wherein the first power supply is referenced to a first input ground associated with a system and the first output voltage is referenced to a first output ground associated with the system;
providing the first output voltage to a programmable device (110); and
controlling, by the programmable device, a second output voltage of a second power supply (130) associated with the system, wherein the second power supply is referenced to a second output ground associated with the system.

12. The method of claim 11, wherein:
the pulse width modulation controller (105) is comprised in a first voltage regulator (102) and is referenced to the first input ground;
the method further comprises generating and providing, by the programmable device, a drive signal to a second voltage regulator (104); and
generating, by the second voltage regulator, the second output voltage based on the drive signal, and optionally further comprising:
receiving a first input voltage at the first voltage regulator;
generating, by the first power supply, the first output voltage based on the first input voltage;
receiving a second input voltage at the second voltage regulator; and
generating, by the second power supply, the second output voltage based on the second input voltage.

13. The method of claim 12, wherein:
the programmable device provides the drive signal to a field effect transistor (M2) comprised in the second voltage regulator via a gate driver comprised in the second voltage regulator and an isolator, wherein the field effect transistor is referenced to a second input ground and is galvanically isolated from the programmable device.

14. The method of any of claims 11 to 13, further comprising:
providing, by a first current sensing device (125), a first sensed current associated with providing the first output voltage;
generating or modifying, by the programmable device, a first drive signal associated with controlling the first output voltage, based on the first sensed current;
providing, by a second current sensing device, a second sensed current associated with providing the second output voltage; and
generating or modifying, by the programmable device, a second drive signal associated with controlling the second output voltage, based on the second sensed current.

15. The method of any of claims 11 to 14, further comprising at least one of:
generating or modifying, by the programmable device (110), a first drive signal associated with controlling the first output voltage, based on a first measurement associated with the first output voltage; and
generating or modifying, by the programmable device, a second drive signal associated with controlling the second output voltage, based on a second measurement associated with the second output voltage; or
further comprising:
monitoring, by the programmable device, a first frequency and a first duty cycle associated with the first output voltage;
generating or modifying, by the programmable device, a first drive signal associated with controlling the first output voltage, based on at least one of the first frequency and the first duty cycle;
monitoring, by the programmable device, a second frequency and a second duty cycle associated with the second output voltage; and
generating or modifying, by the programmable device, a second drive signal associated with controlling the second output voltage, based on at least one of the second frequency and the second duty cycle.
